# EUROPEAN PATENT APPLICATION

(11) **EP 4 711 227 A1**
(43) Date of publication of application: **18.03.2026**
(21) Application number: 24818502.7
(22) Date of filing: 22.05.2024
(51) Int. Cl.: B60W 60/00, B60W 30/182

(54) **CONTROL METHOD AND APPARATUS, AND VEHICLE**

(30) Priority: 09.06.2023 CN 202310685306
(71) Applicant: Shenzhen Yinwang Intelligent Technologies Co., Ltd., Shenzhen, Guangdong 518110 (CN)
(72) Inventor: LIU, Xiaoxue, Shenzhen, Guangdong 518129 (CN); WANG, Xinyu, Shenzhen, Guangdong 518129 (CN); XU, Chunjing, Shenzhen, Guangdong 518129 (CN); SU, Peng, Shenzhen, Guangdong 518129 (CN); LIAN, Caiyun, Shenzhen, Guangdong 518129 (CN); HUANG, Lixin, Shenzhen, Guangdong 518129 (CN); LIU, Zhengji, Shenzhen, Guangdong 518129 (CN); GUAN, Xin, Shenzhen, Guangdong 518129 (CN); SUN, Enna, Shenzhen, Guangdong 518129 (CN)
(74) Representative: MERH-IP Matias Erny Reichl Hoffmann Patentanwälte PartG mbB
(86) International application number: PCT/CN2024/094735
(87) International publication number: WO 2024/250969

(57) **Abstract**

A control method and apparatus, and a vehicle are provided. The control method may be applied to the field of intelligent driving. The control method includes: obtaining data collected by a sensor; inputting the data into a prediction model, to obtain a takeover risk of a vehicle, where the prediction model is obtained through training based on a training data set, the training data set includes sample data and a takeover status and/or a risk status of a sample vehicle, and the sample data is collected by a sensor of the sample vehicle; and controlling the vehicle based on the takeover risk. The control method may be applied to an intelligent vehicle or an electric vehicle, to help improve accuracy of takeover risk prediction, thereby helping improve safety of the vehicle.

## Description

This application claims priority to Chinese Patent Application No. 202310685306.4, filed with the China National Intellectual Property Administration on June 9, 2023 and entitled "CONTROL METHOD AND APPARATUS, AND VEHICLE", which is incorporated herein by reference in its entirety.

### TECHNICAL FIELD

This application relates to the field of intelligent driving, and more specifically, to a method and an apparatus for predicting a takeover risk, and a vehicle.

### BACKGROUND

In the autonomous driving field, because an autonomous driving system has a capability boundary, when the autonomous driving system cannot perceive the boundary of the autonomous driving system or a user does not understand the capability boundary of the autonomous driving system, a driving risk is likely to occur. This affects driving confidence of a driver and commercial implementation of the autonomous driving system. When the driving risk occurs, a vehicle may prompt the driver in a timely manner by determining a takeover risk, so that safety of the vehicle can be improved, and driving safety of the user can be ensured.

Therefore, how to improve accuracy of the takeover risk becomes an urgent problem to be resolved.

### SUMMARY

This application provides a control method and apparatus, and a vehicle, to help improve accuracy of takeover risk prediction, thereby helping improve safety of the vehicle.

According to a first aspect, this application provides a control method. The method may be performed by a vehicle, or may be performed by a computing platform in a vehicle, or may be performed by a chip, a processor, or a circuit used in a vehicle. This is not limited in this application.

The vehicle in this application is a vehicle in a broad sense, and may be a transportation tool (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in embodiments of this application.

The control method includes: obtaining first data collected by a first sensor; inputting the first data into a prediction model, to obtain a takeover risk of a first vehicle, where the prediction model is obtained through training based on a training data set, the training data set includes second data collected by a second sensor and a takeover status and/or a risk status of a second vehicle, and the second vehicle includes the second sensor; and controlling the first vehicle based on the takeover risk.

Based on the foregoing technical solution, a takeover risk of the vehicle may be obtained by inputting data collected by a sensor into the prediction model, and the vehicle may control the vehicle based on the predicted takeover risk. In this way, the takeover risk is predicted by using the prediction model, so that generalization of determining the takeover risk can be improved, and safety of the vehicle can be improved, thereby ensuring driving safety of a user.

In this embodiment of this application, prediction of the takeover risk does not depend on obstacle detection, and a scenario-level takeover risk can be predicted in scenarios such as obstacle false detection, obstacle missed detection, traffic light missed detection, and traffic light false detection. This helps improve safety of the vehicle, and also helps improve a takeover success rate of the user.

With reference to the first aspect, in some implementations of the first aspect, the method further includes: obtaining a first planned trajectory of the first vehicle; and the inputting the first data into a prediction model, to obtain a takeover risk of a first vehicle includes: inputting the first data and the first planned trajectory into the prediction model, to obtain the takeover risk, where the sample data set further includes a planned trajectory of the second vehicle.

Based on the foregoing technical solution, the data collected by the sensor and a planned trajectory of the vehicle may be input into the prediction model, to obtain the takeover risk of the vehicle. In this way, accuracy of takeover risk prediction can be further improved with reference to the planned trajectory of the vehicle, and safety of the vehicle can also be further improved.

With reference to the first aspect, in some implementations of the first aspect, the sample data set further includes a risk status of a scenario in which the second vehicle is located, and the inputting the first data into a prediction model, to obtain a takeover risk of a first vehicle includes: inputting the first data into the prediction model, to obtain the takeover risk and a risk status of a scenario in which the first vehicle is located; and the controlling the first vehicle based on the takeover risk includes: controlling the first vehicle based on the takeover risk and the risk status of the scenario in which the first vehicle is located.

Based on the foregoing technical solution, a risk status of a scenario in which the vehicle is located may be further output by using the prediction model. The vehicle may perform control with reference to the takeover risk and the risk status of a scenario, to help improve accuracy of performing a control decision by the vehicle.

With reference to the first aspect, in some implementations of the first aspect, the first vehicle further includes a prompt apparatus, and the controlling the first vehicle based on the takeover risk includes: controlling the prompt apparatus to prompt a user with the takeover risk.

Based on the foregoing technical solution, the prompt apparatus is controlled to prompt the user, so that the user can know the takeover risk of the vehicle. For example, when the takeover risk is high, a display apparatus or a sound-making apparatus may be used to prompt the user, to improve attention of the driver and ensure that the driver successfully takes over the vehicle.

With reference to the first aspect, in some implementations of the first aspect, the training data set further includes a takeover reason of the second vehicle, and the inputting the first data into a prediction model to obtain a takeover risk of a first vehicle includes: inputting the first data into the prediction model, to obtain the takeover risk and a takeover reason of the first vehicle; and the controlling the prompt apparatus to prompt a user with the takeover risk includes: controlling the prompt apparatus to prompt the user with the takeover risk and the takeover reason.

Based on the foregoing technical solution, the prediction model may further output the takeover reason. In this way, the driver can determine a reason why the takeover risk is generated in a current scenario. This helps improve attention of the driver, and also helps improve the takeover success rate of the user.

With reference to the first aspect, in some implementations of the first aspect, the controlling the first vehicle based on the takeover risk includes: adjusting a frequency of attention detection and/or a frequency of hand-off detection based on the takeover risk.

In some possible implementations, the adjusting a frequency of attention detection and/or a frequency of hand-off detection based on the takeover risk includes: increasing the frequency of attention detection and/or the frequency of hand-off detection when the takeover risk is greater than or equal to a preset threshold; or decreasing the frequency of attention detection and/or the frequency of hand-off detection when the takeover risk is less than the preset threshold.

Based on the foregoing technical solution, the vehicle may adjust the frequency of attention detection and/or the frequency of hand-off detection based on the takeover risk. For example, when the takeover risk is high, the frequency of attention detection and/or the frequency of hand-off detection and a frequency of reminding the user may be increased, to increase attention of the driver. For another example, when the takeover risk is low, the frequency of attention detection and/or the frequency of hand-off detection and a frequency of reminding the driver may be reduced, so that power consumption of the vehicle can be reduced.

With reference to the first aspect, in some implementations of the first aspect, the first vehicle is in an autonomous driving state, and the controlling the first vehicle based on the takeover risk includes: controlling, based on the takeover risk, the prompt apparatus to prompt the user to perform acceleration control, prompt the user to assist in steering, or prompt the user to take over the first vehicle or exit the autonomous driving state.

Based on the foregoing technical solution, the prompt apparatus is controlled to prompt the user to perform acceleration control, prompt the user to assist in steering, and prompt the user to take over the vehicle or exit the autonomous driving state, so that the user can clearly know an action that the vehicle currently expects the user to perform, or the user can clearly know that the vehicle is about to exit the autonomous driving state. The user may complete a corresponding operation based on a prompt of the prompt apparatus, to improve safety of the vehicle and ensure driving safety of the user.

With reference to the first aspect, in some implementations of the first aspect, the first vehicle is in an autonomous driving state, and the controlling the first vehicle based on the takeover risk includes: controlling, based on the takeover risk and the scenario in which the first vehicle is located, the prompt apparatus to prompt the user with a third planned trajectory; and when input of the user for confirming the third planned trajectory is obtained, controlling the first vehicle based on the third planned trajectory.

Based on the foregoing technical solution, when the prediction model outputs the takeover risk and a new planned trajectory may be planned based on the takeover risk and an environment in which the vehicle is located, the new planned trajectory may be indicated to the user. In this way, the user may choose to take over the vehicle or choose to use the new planned trajectory. When the new planned trajectory is used, the vehicle may not exit the autonomous driving state, and the user does not need to take over the vehicle. This helps improve driving experience of the user.

In some possible implementations, the scenario in which the first vehicle is located includes information about an obstacle (including a static obstacle, a dynamic obstacle, a traffic light, and the like) in an environment detected by the first vehicle, information about a lane line, and the like.

With reference to the first aspect, in some implementations of the first aspect, the takeover risk is a takeover risk within future preset duration.

In this embodiment of this application, the takeover risk within the future preset duration is predicted, and reaction time for takeover is reserved for the user. This helps improve a takeover success rate of the user.

According to a second aspect, a control apparatus is provided. The apparatus includes: an obtaining unit, configured to obtain first data collected by a first sensor; a prediction unit, configured to input the first data into a prediction model, to obtain a takeover risk of a first vehicle, where the prediction model is obtained through training based on a training data set, the training data set includes second data collected by a second sensor and a takeover status and/or a risk status of a second vehicle, and the second vehicle includes the second sensor; and a control unit, configured to control the first vehicle based on the takeover risk.

With reference to the second aspect, in some implementations of the second aspect, the obtaining unit is further configured to obtain a first planned trajectory of the first vehicle; and the prediction unit is configured to input the first data and the first planned trajectory into the prediction model, to obtain the takeover risk, where the sample data set further includes a planned trajectory of the second vehicle.

With reference to the second aspect, in some implementations of the second aspect, the sample data set further includes a risk status of a scenario in which the second vehicle is located; the prediction unit is configured to input the first data into the prediction model, to obtain the takeover risk and a risk status of a scenario in which the first vehicle is located; and the control unit is configured to control the first vehicle based on the takeover risk and the risk status of the scenario in which the first vehicle is located.

With reference to the second aspect, in some implementations of the second aspect, the first vehicle further includes a prompt apparatus; and the control unit is configured to control the prompt apparatus to prompt a user with the takeover risk.

With reference to the second aspect, in some implementations of the second aspect, the training data set further includes a takeover reason of the second vehicle; the prediction unit is configured to input the first data into the prediction model, to obtain the takeover risk and a takeover reason of the first vehicle; and the control unit is configured to control the prompt apparatus to prompt the user with the takeover risk and the takeover reason.

With reference to the second aspect, in some implementations of the second aspect, the control unit is configured to: adjust a frequency of attention detection and/or a frequency of hand-off detection based on the takeover risk.

With reference to the second aspect, in some implementations of the second aspect, the first vehicle is in an autonomous driving state, and the control unit is configured to: control, based on the takeover risk, the prompt apparatus to prompt the user to perform acceleration control, prompt the user to assist in steering, or prompt the user to take over the first vehicle or exit the autonomous driving state.

With reference to the second aspect, in some implementations of the second aspect, the first vehicle is in an autonomous driving state, and the control unit is configured to: control, based on the takeover risk and the scenario in which the first vehicle is located, the prompt apparatus to prompt the user with a third planned trajectory; and when the obtaining unit obtains input of the user for confirming the third planned trajectory, control the first vehicle based on the third planned trajectory.

With reference to the second aspect, in some implementations of the second aspect, the takeover risk is a takeover risk within future preset duration.

According to a third aspect, this application provides a control apparatus. The apparatus includes a processing unit and a storage unit. The storage unit is configured to store instructions. The processing unit executes the instructions stored in the storage unit, so that the apparatus performs any possible control method in the first aspect.

According to a fourth aspect, this application provides a control system. The control system includes a sensor and a computing platform. The computing platform includes any possible control apparatus in the second aspect, or includes the control apparatus in the third aspect.

With reference to the fourth aspect, in some implementations of the fourth aspect, the control system further includes a display apparatus.

With reference to the fourth aspect, in some implementations of the fourth aspect, the computing platform is located in a cloud server.

According to a fifth aspect, this application provides a vehicle. The vehicle includes any possible control apparatus in the second aspect, or includes the control apparatus in the third aspect, or includes the control system in the fourth aspect.

According to a sixth aspect, this application provides a server. The server includes any possible control apparatus in the second aspect or the third aspect.

With reference to the sixth aspect, in some implementations of the sixth aspect, the server further includes a communication unit. The communication unit is configured to receive first data sent by a first vehicle.

According to a seventh aspect, a mobile terminal is provided. The mobile terminal includes any possible control apparatus in the second aspect or the third aspect.

According to an eighth aspect, this application provides a computer program product, where the computer program product includes computer program code, and when the computer program code is run on a computer, the computer is enabled to perform any possible control method in the first aspect.

It should be noted that all or a part of the computer program code may be stored in a first storage medium. The first storage medium may be packaged together with a processor, or may be packaged separately from a processor. This is not specifically limited in this embodiment of this application.

According to a ninth aspect, this application provides a computer-readable medium, where the computer-readable medium stores program code, and when the computer program code is run on a computer, the computer is enabled to perform any possible control method in the first aspect.

According to a tenth aspect, this application provides a chip. The chip includes a circuit, and the circuit is configured to perform any possible control method in the first aspect.

### BRIEF DESCRIPTION OF DRAWINGS

FIG. 1 is a functional block diagram of a vehicle according to an embodiment of this application;
FIG. 2 is a schematic flowchart of a control method according to an embodiment of this application;
FIG. 3 is a schematic flowchart of a model training method according to an embodiment of this application;
FIG. 4 is a diagram of a prediction process of an end-to-end prediction model according to an embodiment of this application;
FIG. 5 is another diagram of a prediction process of an end-to-end prediction model according to an embodiment of this application;
FIG. 6 is a diagram of displaying a takeover risk on a display apparatus according to an embodiment of this application;
FIG. 7(a) to FIG. 7(d) are a group of diagrams of a human machine interface of a takeover risk according to an embodiment of this application.
FIG. 8(a) to FIG. 8(d) are another group of diagrams of a human machine interface of a takeover risk according to an embodiment of this application;
FIG. 9(a) to FIG. 9(d) are still another group of diagrams of a human machine interface of a takeover risk according to an embodiment of this application;
FIG. 10 is yet another group of diagrams of a human machine interface of a takeover risk according to an embodiment of this application;
FIG. 11 is a diagram of a scenario in which a vehicle is located according to an embodiment of this application;
FIG. 12 is another diagram of a scenario in which a vehicle is located according to an embodiment of this application;
FIG. 13 is still another diagram of a scenario in which a vehicle is located according to an embodiment of this application;
FIG. 14 is yet another diagram of a scenario in which a vehicle is located according to an embodiment of this application;
FIG. 15A and FIG. 15B are a diagram of a system architecture according to an embodiment of this application; and
FIG. 16 is a block diagram of a control apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and represents that three relationships may exist. For example, at least one of A and B may represent the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation. In addition, in the descriptions of embodiments, unless otherwise specified, "a plurality of" means two or more.

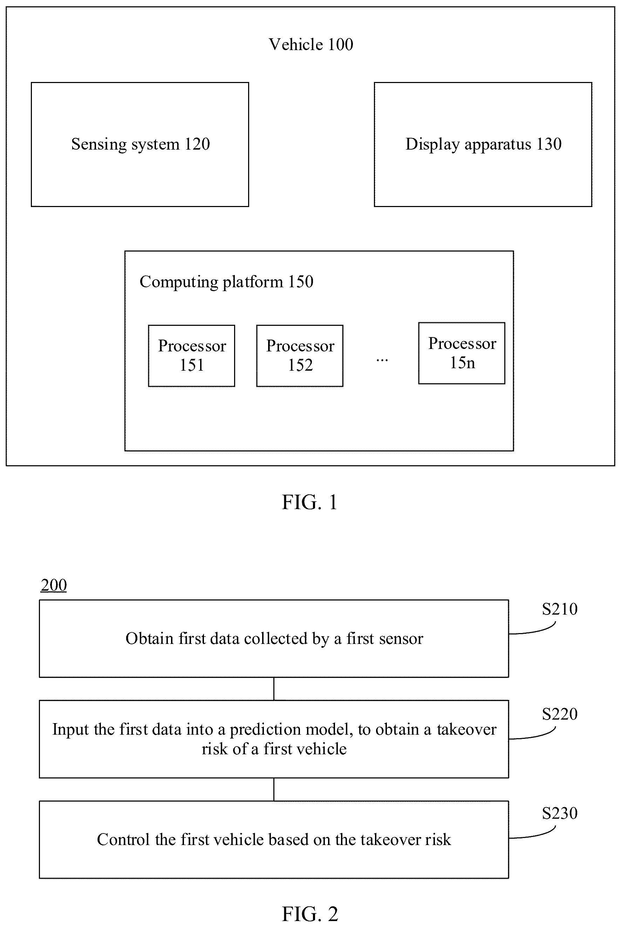

FIG. 1 is a functional block diagram of a vehicle 100 according to an embodiment of this application. The vehicle 100 may include a sensing system 120, a display apparatus 130, and a computing platform 150. The sensing system 120 may include one or more sensors that sense information about an ambient environment of the vehicle 100. For example, the sensing system 120 may include a positioning system. The positioning system may be a global positioning system (global positioning system, GPS), a BeiDou system, or another positioning system. The sensing system 120 may further include one or more of an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement configuration of the hardware circuit may be understood as a process in which the processor loads instructions to implement functions of a part or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may call the instructions in the memory, to implement a corresponding function.

The display apparatus 130 in a cabin is mainly classified into two types: a first type is a vehicle-mounted display, and a second type is a projection display, for example, a head-up display (head-up display, HUD) apparatus. The in-vehicle display is a physical display, and is an important part of an in-vehicle infotainment system. A plurality of displays may be disposed in the cabin, for example, a digital dashboard display, a central display screen, a display in front of a passenger in a front passenger seat (also referred to as a front-row passenger), a display in front of a rear-seat passenger on the left, and a display in front of a rear-seat passenger on the right. Even a window may be used as a display for display. Head-up display, also referred to as a head-up display system, is mainly configured to display driving information such as a speed and navigation on a display device (for example, a windshield) in front of a driver, to reduce line-of-sight transfer time of the driver, avoid a pupil change caused by a line-of-sight transfer of the driver, and improve traveling safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that the HUD may also have another type of system with technology evolution. This is not limited in this application.

FIG. 2 is a schematic flowchart of a control method 200 according to an embodiment of this application. The method 200 may be performed by the vehicle 100 shown in FIG. 1, or the method 200 may be performed by the computing platform 150, or the method 200 may be performed by a system including the computing platform 150 and a sensor, or the method 200 may be performed by a system-on-chip (system-on-chip, SoC) in the computing platform 150, or the method 200 may be performed by a processor in the computing platform 150, or the method 200 may be performed by a cloud server. The method 200 includes steps S210 to S230.

S210: Obtain first data collected by a first sensor.

Optionally, the first sensor may be one sensor, or may be a plurality of sensors.

For example, the first sensor may be a front-view camera, or the first sensor may include a front-view camera, a surround-view camera, and a rear-view camera.

Optionally, the first sensor may be one type of sensor, or may be a plurality of types of sensors.

For example, the first sensor may be a camera, or the first sensor may include at least two of a camera, an ultrasonic radar, a lidar, and a millimeter-wave radar.

The first data may be raw data (raw data) collected by the first sensor, or may be data processed by the first sensor.

S220: Input the first data into a prediction model, to obtain a takeover risk of a first vehicle.

S220 may be understood as a process of a model prediction phase. The following separately describes a model training phase and the model prediction phase.

### Model training phase

Optionally, the prediction model is obtained through training based on a training data set. The training data set includes second data collected by a second sensor and a takeover status and/or a risk status of a second vehicle. The second vehicle includes the second sensor.

Optionally, a cloud server may train the prediction model by using the data collected by the second sensor on the second vehicle and a label result of the data collected by the second sensor.

The second vehicle may be a plurality of different types of vehicles, and the second sensor may be a plurality of different types of sensors.

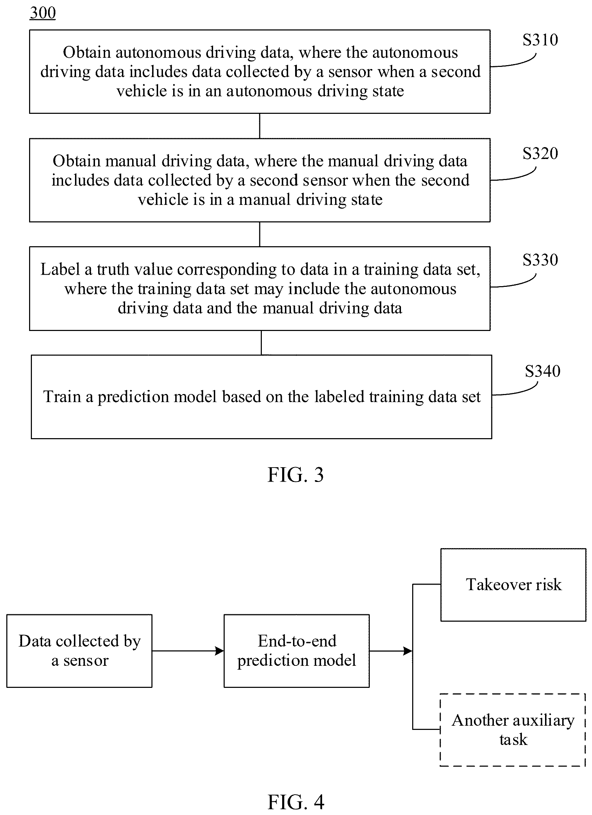

FIG. 3 is a schematic flowchart of a model training method 300 according to an embodiment of this application. The method 300 may be performed by the cloud server, and the method 300 includes S310 to S340.

S310: Obtain autonomous driving data, where the autonomous driving data includes data collected by a sensor when the second vehicle is in an autonomous driving state.

Optionally, the autonomous driving data includes autonomous driving takeover data and autonomous driving non-takeover data. The autonomous driving takeover data includes data collected by the second sensor when the second vehicle is in a takeover state. The autonomous driving non-takeover data includes data collected by the second sensor when the second vehicle is in a non-takeover state.

Optionally, the cloud server may perform sample balancing on the data collected by the second sensor in the takeover state and the data collected by the second sensor in the non-takeover state.

S320: Obtain manual driving data, where the manual driving data includes data collected by the second sensor when the second vehicle is in a manual driving state.

Optionally, the manual driving data includes manual driving risk data and manual driving non-risk data. The manual driving risk data includes data collected by the second sensor when the second vehicle is in a risk state. The manual driving non-risk data includes data collected by the second sensor when the second vehicle is not in the risk state.

For example, the data collected by the second sensor when the second vehicle is in the risk state includes but is not limited to the following types of data:
(1) data collected by the second sensor when a traffic accident occurs;
(2) data collected by the second sensor when the second vehicle violates a traffic regulation;
(3) data collected by the second sensor when an abnormal sudden change occurs in a speed, acceleration, and a steering wheel rotational speed of the second vehicle during manual driving (where a driver needs to be warned in advance before the sudden change occurs, to perform smooth processing), for example, sudden braking, sharp steering, or other behavior caused by not noticing a vehicle at a gap, not noticing an animal that crosses a road, or radical cut-in;
(4) data collected by the second sensor when a driver monitoring system (driver monitoring system, DMS) detects that the driver is in a fatigue driving state; and
(5) data obtained by labeling initially filtered potential risk data by a labeler and grading risk degrees.

Optionally, the cloud server may perform sample balancing on the data collected by the second sensor when the second vehicle is in the risk state and the data collected by the second sensor when the second vehicle is not in the risk state.

The foregoing data balancing may be performed by the cloud server, or may be performed manually.

There is no specific actual sequence between S310 and S320.

S330: Label truth value information corresponding to data in the training data set, where the training data set may include the autonomous driving data and the manual driving data.

The foregoing labeling process may be performed by the cloud server, or may be performed manually.

Optionally, the truth value information may include three-dimensional occupancy (3D occupancy), a speed, semantics, a takeover status, and the like. The 3D occupancy indicates whether each voxel point in a 3D coordinate system is occupied. The speed represents a ratio of a location offset between a current frame and a next frame to a time difference between the two frames, or the speed represents data collected by a speed sensor. The semantics includes classification information of an object (for example, a vehicle, and a vulnerable road user (vulnerable road user, VRU)). The takeover status includes: The second vehicle is in the takeover state or the second vehicle is in the non-takeover state.

Table 1 shows a sample type, input information, and the truth value information of the training data set.

**Table 1**

| Data | Meaning |
|---|---|
| Sample type | Autonomous driving takeover data, autonomous driving non-takeover data, manual driving risk data, and manual driving non-risk data |
| Input information | Data collected by a camera, data collected by an ultrasonic radar, data collected by a lidar, and data collected by a millimeter-wave radar |
| Truth value information | 3D occupancy, speed, semantics, and takeover status |

The foregoing is described by using an example in which the training data set includes the autonomous driving data and the manual driving data. This embodiment of this application is not limited thereto. For example, a prediction model 1 may be trained after the autonomous driving data is labeled, and a prediction model 2 may be trained after the manual driving data is labeled. In a prediction phase, a status of the vehicle may be determined. When the vehicle is in the autonomous driving state, the data collected by the sensor may be input into the prediction model 1, to obtain a takeover risk. Alternatively, when the vehicle is in the manual driving state, the data collected by the sensor may be input into the prediction model 2, to obtain a takeover risk.

When the data is labeled, more or less truth value information may be further included. For example, the truth value information may further include a takeover reason, a scenario in which the second vehicle is located, and a risk status in the scenario.

Optionally, the input information in Table 1 may further include a planned trajectory of the vehicle.

S340: Train the prediction model based on the labeled training data set.

The autonomous driving data and the manual driving data are used to train an end-to-end (end-to-end) prediction model. The trained prediction model may be used to predict an actual takeover risk in a traveling process of the vehicle.

### Model prediction phase

FIG. 4 is a diagram of a prediction process of an end-to-end prediction model according to an embodiment of this application. As shown in FIG. 4, input of the end-to-end prediction model is data collected by a sensor, and output is the takeover risk (or a takeover probability).

Optionally, output of the end-to-end prediction model may further include another auxiliary task. For example, the another auxiliary task may include occupancy and semantics of each voxel point in a 3D coordinate system and a ratio of an offset between a current frame and a next frame to a time difference.

Optionally, the method 200 further includes: obtaining a first planned trajectory of the first vehicle; and the inputting the first data into a prediction model, to obtain a takeover risk of a first vehicle includes: inputting the first data and the first planned trajectory into the prediction model, to obtain the takeover risk, where a sample data set further includes a planned trajectory of the second vehicle when the second sensor collects the second data.

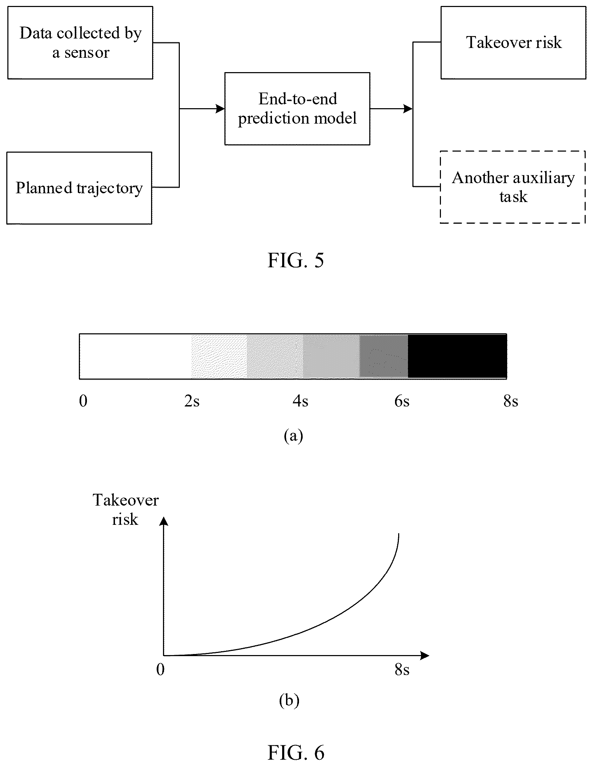

FIG. 5 is another diagram of a prediction process of an end-to-end prediction model according to an embodiment of this application. As shown in FIG. 5, input of the end-to-end prediction model is data collected by a sensor and a planned trajectory, and output is the takeover risk.

Raw data collected by the sensor and the planned trajectory of the vehicle are input into the end-to-end prediction model, and then takeover risk prediction and other auxiliary task learning are performed after the raw data and the planned trajectory passes through a backbone network in the prediction model.

For example, data from different sensor sources and data of different structures may be encoded by using a network structure like a residual neural network (residual neural network, ResNet), a deep learning on point sets for 3D classification and segmentation (deep learning on point sets for 3D classification and segmentation, PointNet) algorithm, or a recurrent neural network (recurrent neural network, RNN). Different features are fused by using a network structure like a transformer (transformer) or a multilayer perceptron (multilayer perceptron, MLP), and are used to predict a takeover risk and another auxiliary task after passing through the backbone network. A sensor fusion feature is used to perform modeling and prediction on an objective physical world. The sensor fusion feature is interactively fused with a planned trajectory feature, to predict a scenario-level takeover risk.

The foregoing scenario-level takeover risk may be understood as a takeover risk not for a specific target, but a takeover risk in a scenario in which the vehicle is located or a takeover risk in the scenario with reference to a driving action of the ego vehicle.

The backbone network may alternatively be replaced with a machine learning algorithm, for example, a support vector machine (support vector machine, SVM) or a decision tree.

A loss function of the end-to-end prediction model may be designed as a weighting of a loss function of each task. For example, the task includes but is not limited to one or more of the following:
(1) takeover probability (time) prediction task: A loss function may be a regression loss function like a binary classification (cross entropy) loss function or a mean squared error (mean squared error, MSE) loss function whose truth value is defined as whether takeover is performed (where the truth value is defined as a curve with actual takeover time as a peak value and with a smaller value as far as the takeover time is concerned, for example, a Gaussian curve).
(2) risk status prediction task: a classification loss function of a risk status, for example, a cross entropy loss (cross entropy loss) function;
(3) loss function of a classification task (for example, a takeover reason);
(4) cross entropy loss function, focal loss (focal loss) function, or the like indicating whether each voxel (voxel) point indicated by three-dimensional occupancy is occupied;
(5) cross entropy loss function of semantic classification of each occupied voxel point indicated by three-dimensional occupancy, and the like; and
(6) speed loss function of each occupied voxel point indicated by three-dimensional occupancy, for example, a smooth L1 loss (smooth L1 loss) function.

Optionally, the takeover risk is a takeover risk within future preset duration. For example, the preset duration is 8 seconds (seconds, s).

S230: Control the first vehicle based on the takeover risk.

Optionally, the first vehicle further includes a prompt apparatus, and the method further includes: controlling the prompt apparatus to prompt the user with the takeover risk.

For example, the prompt apparatus may include one or more of a display apparatus (for example, a dashboard screen or a central display), a HUD, a speaker, a steering wheel, and an atmosphere light. For example, the steering wheel may vibrate to prompt the user with the takeover risk, and a higher steering wheel vibration frequency indicates a higher takeover risk. For another example, the user may be prompted with the takeover risk by using a color change of the atmosphere light. An increasingly red color of the atmosphere light indicates a higher takeover risk.

For another example, FIG. 6 is a diagram of displaying a takeover risk on a display apparatus according to an embodiment of this application.

As shown in (a) in FIG. 6, a vehicle may visualize the takeover risk on a display interface of the display apparatus, and display an estimated result of the takeover risk in next eight consecutive seconds by using a progress bar (bar). There is no takeover risk within 0 to 2 seconds, and the takeover risk gradually increases within 2 to 8 seconds.

As shown in (b) in FIG. 6, the vehicle may further display an estimated result of the takeover risk in the next eight seconds by using a curve.

Optionally, the estimation result of the takeover risk at a continuously changing future moment may be displayed at a high risk moment, or may be displayed in real time. The user may intuitively feel and understand a current operating status of the vehicle, to make a response at any time.

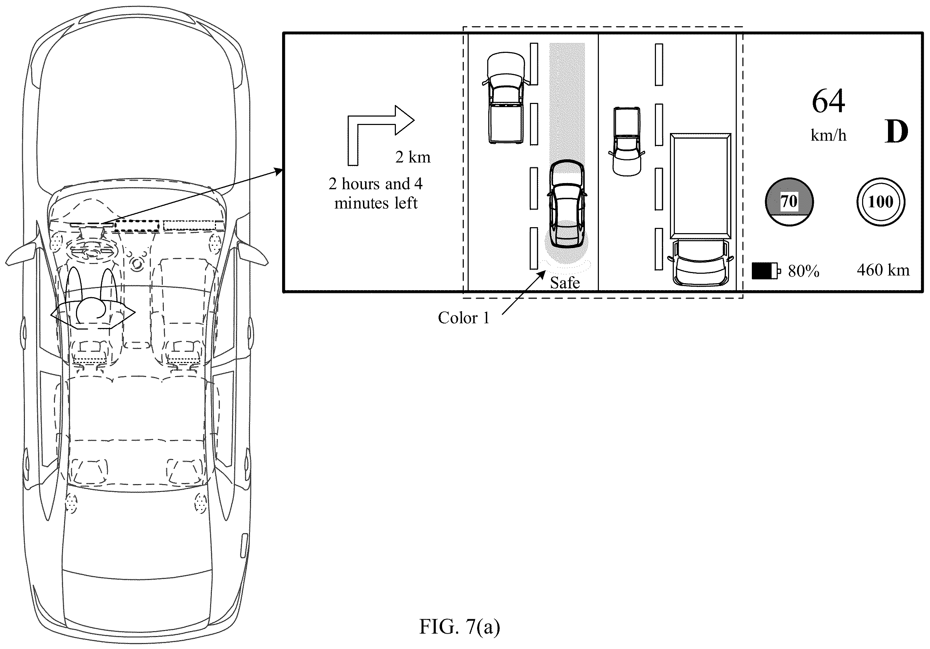

FIG. 7(a) to FIG. 7(d) are a group of diagrams of a human machine interface (human machine interface, HMI) of a takeover risk according to an embodiment of this application.

A vehicle may control a display apparatus to indicate the takeover risk by using a continuous progress bar. A color change and display may be classified into four levels.

As shown in FIG. 7(a), when a color around the vehicle is a color 1, it indicates that the current vehicle has no takeover risk (or the current vehicle is in a safe state).

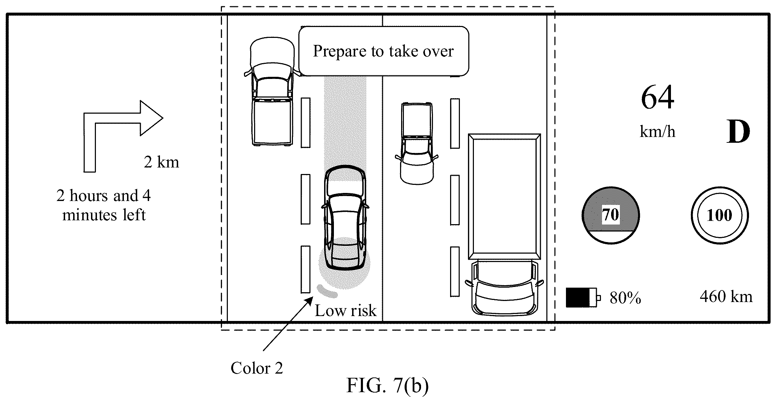

As shown in FIG. 7(b), when the color around the vehicle is a color 2, it indicates that a current takeover risk of the vehicle is a low risk.

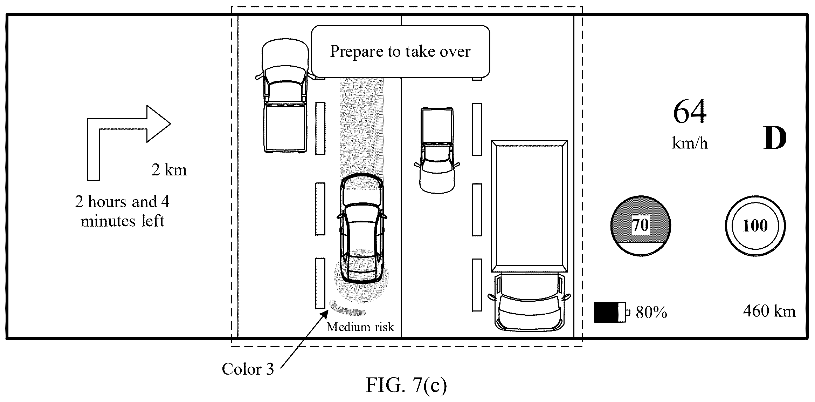

As shown in FIG. 7(c), when the color around the vehicle is a color 3, it indicates that the current vehicle takeover risk is a medium risk, and the user is prompted with "Prepare to take over".

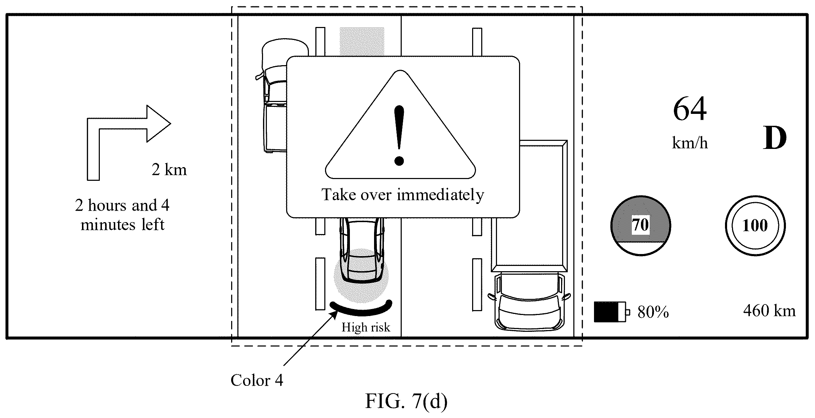

As shown in FIG. 7(d), when the color around the vehicle is a color 4, it indicates that the current vehicle takeover risk is a high risk, and the user is prompted with "Take over immediately".

The progress bar in FIG. 7(a) to FIG. 7(d) indicates a takeover probability or a takeover risk of (0, 1) in a current scenario (or future fixed time).

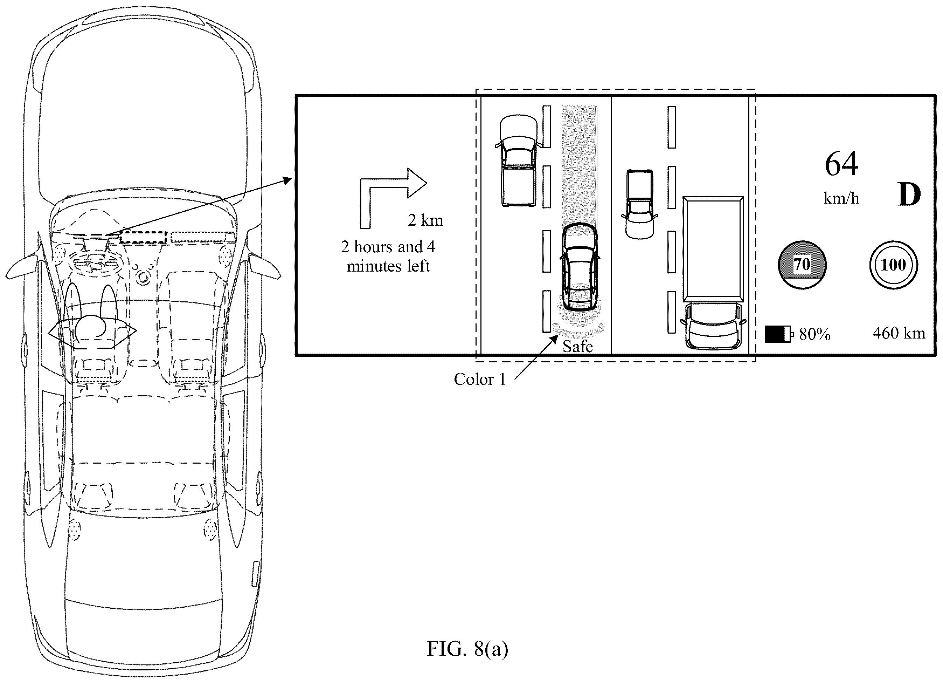

FIG. 8(a) to FIG. 8(d) are another group of diagrams of an HMI of a takeover risk according to an embodiment of this application.

A vehicle may control a display apparatus to indicate takeover time by using a continuous progress bar. A color change and display may be classified into four levels.

As shown in FIG. 8(a), when a color around the vehicle is a color 1, it indicates that the vehicle has no takeover risk (or the current vehicle is in a safe state).

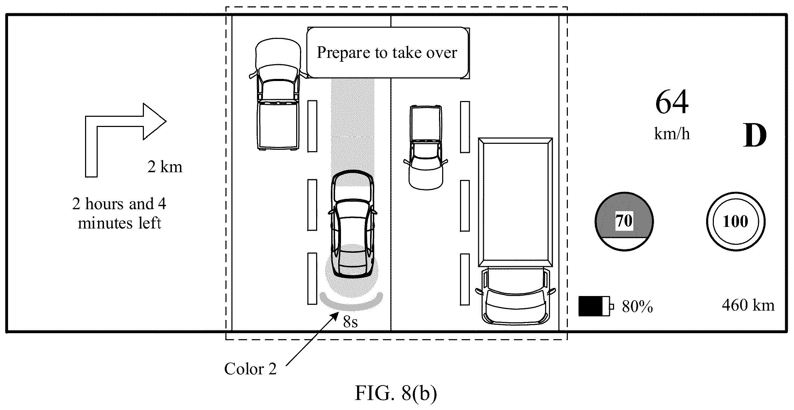

As shown in FIG. 8(b), when the color around the vehicle is a color 2, it indicates that there is a takeover risk and takeover time is long (for example, a user needs to take over the vehicle after 8s from a current moment).

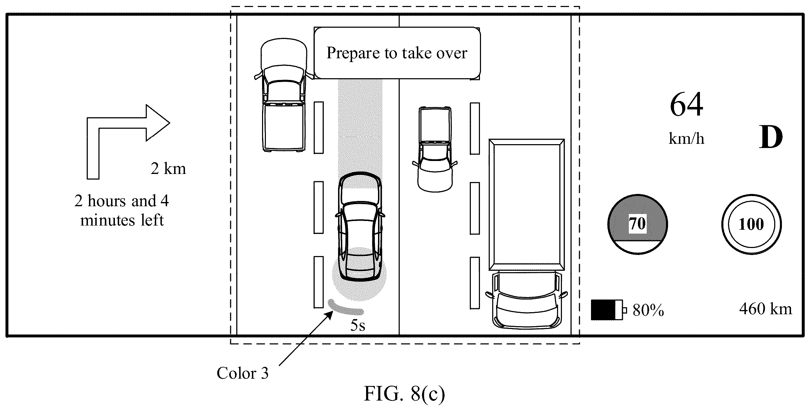

As shown in FIG. 8(c), when the color around the vehicle is a color 3, it indicates that the takeover time is shortened (for example, 5s), and the user is prompted with "Prepare to take over".

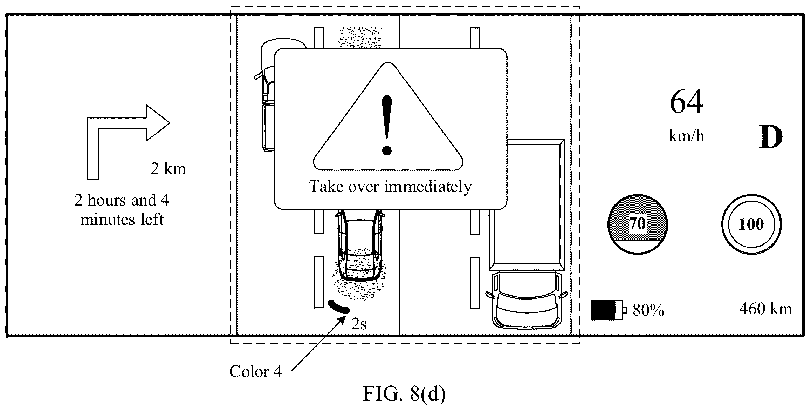

As shown in FIG. 8(d), when the color around the vehicle is a color 4, it indicates that the takeover time is close (for example, 2s), and the user is prompted with "Take over immediately".

The progress bar in FIG. 8(a) to FIG. 8(d) indicates predicted continuous takeover time, and indicate the takeover risk in a countdown form.

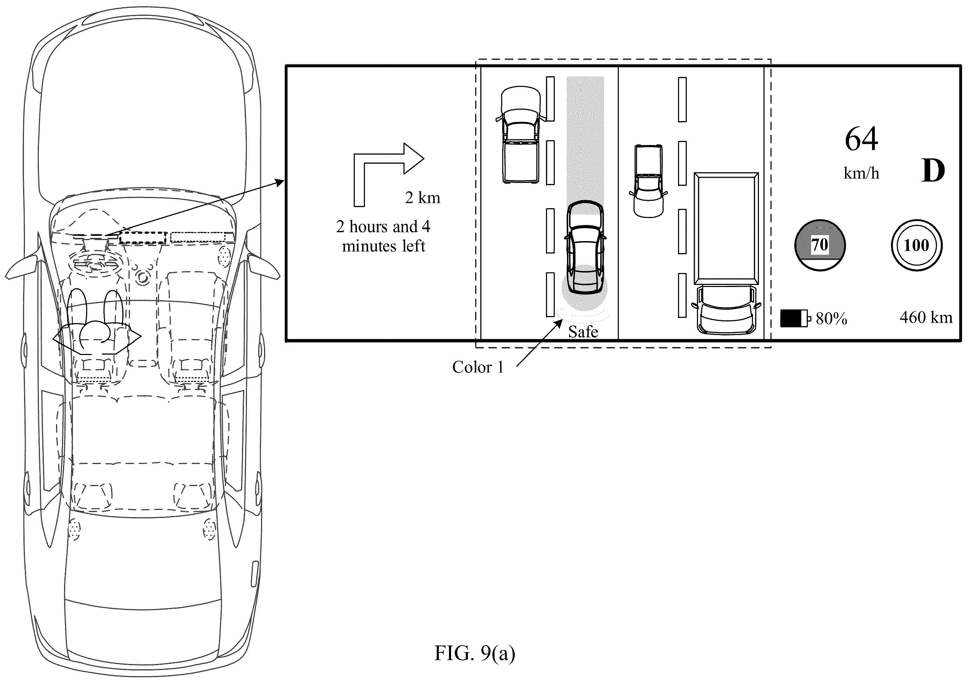

FIG. 9(a) to FIG. 9(d) are still another group of diagrams of an HMI of a takeover risk according to an embodiment of this application.

A vehicle may control a display apparatus to indicate a risk degree by using a continuous progress bar. A longer progress bar indicates a higher takeover risk. Takeover time is expressed in seconds.

As shown in FIG. 9(a), when a progress of the progress bar (a color of the progress bar is a color 1) is 0, it indicates that the vehicle has no takeover risk (or the current vehicle is in a safe state).

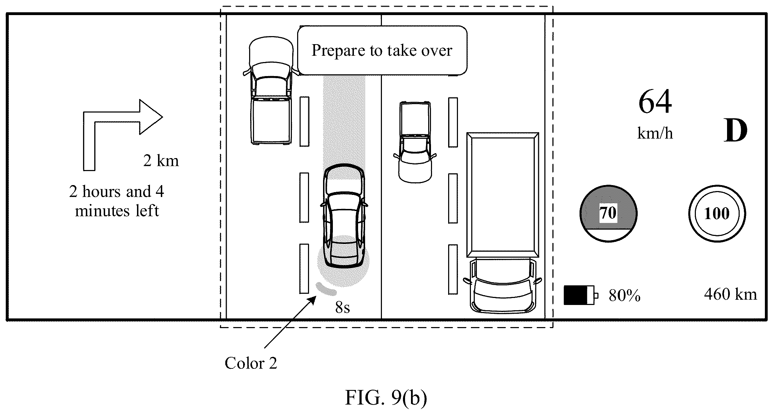

As shown in FIG. 9(b), when the progress of the progress bar increases (the color of the progress bar is a color 2) and "8s" is displayed under the progress bar, it indicates that the vehicle is currently at a low takeover risk and the user needs to take over the vehicle after 8 seconds.

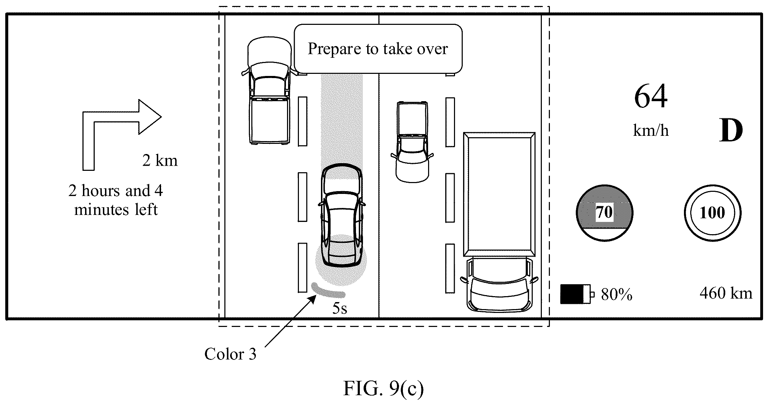

As shown in FIG. 9(c), when the progress of the progress bar continues to increase (the color of the progress bar is a color 3) and "5s" is displayed under the progress bar, it indicates that the vehicle is currently at a medium takeover risk and the user needs to take over the vehicle after 5 seconds.

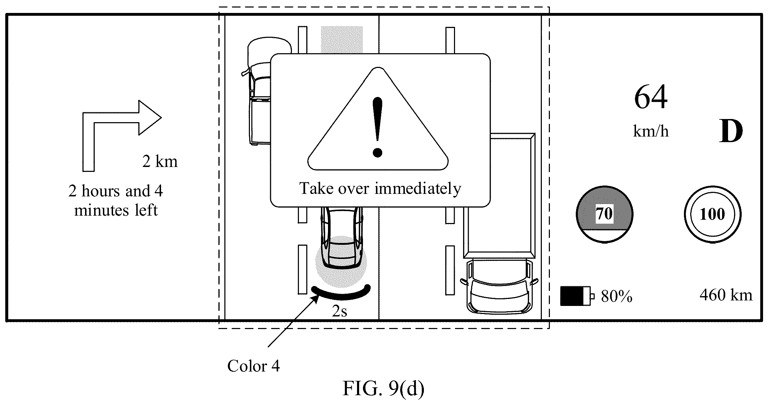

As shown in FIG. 9(d), when the progress of the progress bar continues to increase (the color of the progress bar is a color 4) and "2s" is displayed under the progress bar, it indicates that the vehicle is currently at a high takeover risk and the user needs to take over the vehicle after 2 seconds.

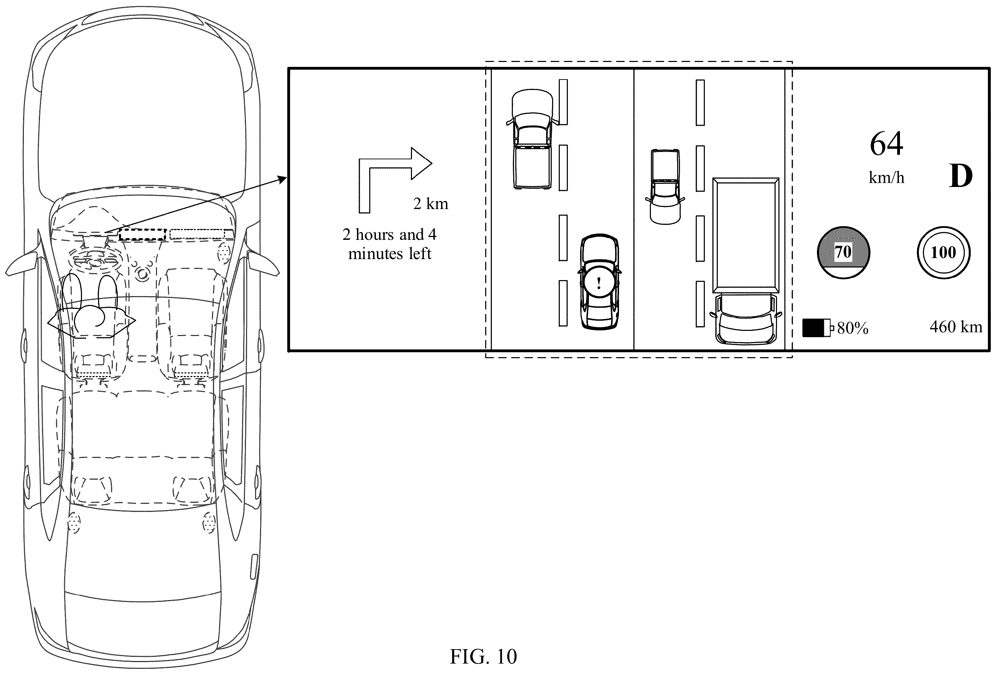

FIG. 10 is yet another group of diagrams of an HMI of a takeover risk according to an embodiment of this application.

When a vehicle is in a manual driving scenario, the vehicle may provide, at a high takeover risk by using a background color of a dashboard or an icon, a prompt for the driver to increase attention. If the vehicle is in a dangerous state caused by improper driving behavior of the driver, an exclamation mark (which may be a two-dimensional exclamation mark or a three-dimensional exclamation mark) appears on the top of the vehicle displayed on the dashboard. For example, when the three-dimensional exclamation mark appears on the top of the vehicle, a rotation animation may be displayed on a dashboard screen. For another example, a vehicle body of the ego vehicle on the dashboard screen may be controlled to turn red to enhance warning, along with a prompt tone and hardware (for example, a steering wheel) vibration. In this way, the driver can be reminded in a multi-dimensional manner that the driver is currently in a dangerous driving state, so that attention of the driver is improved.

Appearances of takeover time and the takeover risk may be designed by using a sector, a circle, or a straight-line progress bar, or may be displayed with reference to an existing icon (icon), or may be displayed through a background color change of the dashboard. This is not specifically limited in embodiments of this application.

Optionally, the controlling the first vehicle based on the takeover risk includes: adjusting sensitivity of the DMS based on the takeover risk.

Optionally, the adjusting sensitivity of the DMS based on the takeover risk includes: adjusting a frequency of attention detection and/or a frequency of hand-off detection based on the takeover risk.

For example, when the takeover risk is less than or equal to a preset threshold, a detection frequency may be decreased; or when the takeover risk is greater than the preset threshold, the detection frequency may be increased.

Optionally, the takeover risk may be an average value of takeover risks within future N (N is a positive integer) seconds, or may be a takeover risk at a current moment.

Optionally, the preset threshold may vary for different scenarios in which the vehicle is located. For example, a preset threshold corresponding to a case in which the vehicle travels on a highway is less than a preset threshold corresponding to a case in which the vehicle travels on an urban road.

Optionally, data closed-loop may be implemented based on the takeover risk. For example, when user consent is obtained, data collected by a sensor when there is the takeover risk, a status of the vehicle, and a planned trajectory of the vehicle are uploaded to a cloud server. Then, the cloud server may perform data driven improvement (data driven improvement, DDI) by using the data sent by the vehicle. This can help the cloud server implement analysis and algorithm optimization, for example, reinforcement learning (reinforcement learning, RL) and negative feedback learning.

Optionally, the vehicle may be controlled in different scenarios based on the takeover risk. For example, the vehicle may reduce the takeover risk after adjusting an autonomous driving strategy, and adjust from a radical autonomous driving strategy (preferential to preempting another vehicle) to a non-radical autonomous driving strategy (preferential to giving way to another vehicle).

Optionally, the first vehicle is in an autonomous driving state, and the controlling the first vehicle based on the takeover risk includes: controlling, based on the takeover risk and a scenario in which the first vehicle is located, the prompt apparatus to prompt the user with a third planned trajectory; and when input of the user for confirming the third planned trajectory is obtained, controlling the first vehicle based on the third planned trajectory.

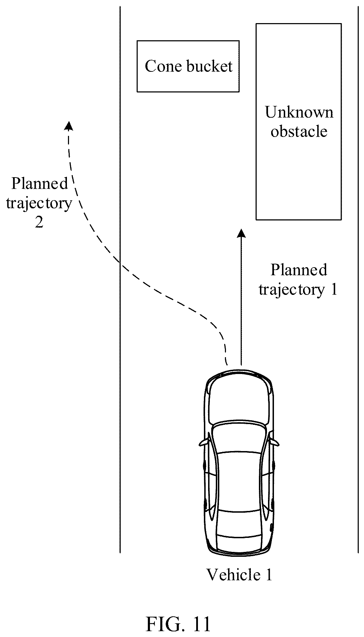

FIG. 11 is a diagram of a scenario in which a vehicle is located according to an embodiment of this application.

As shown in FIG. 11, a vehicle 1 is in an autonomous driving state, and a planned trajectory of the vehicle 1 is a trajectory 1. When it is detected that there is a static engineering vehicle or the like that is not in a whitelist detection range in front of the vehicle 1, the vehicle 1 may determine a planned trajectory 2 based on a takeover risk and an environment in which the vehicle is located. The planned trajectory 2 requires the vehicle to cross a solid line for detour. The vehicle 1 may display the planned trajectory 2 on a display apparatus, and prompt a user whether to continue traveling along the planned trajectory 2, or may prompt the user to take over the vehicle. After input of the user for determining to use the planned trajectory 2 for traveling is obtained, the vehicle 1 may continue to maintain the autonomous driving state and switch from traveling along the planned trajectory 1 to traveling along the planned trajectory 2.

When the vehicle has the takeover risk and the vehicle cannot determine whether a solid line needs to be crossed for detour, a new planned trajectory 2 is obtained through calculation, and the user is requested to confirm a corresponding action through takeover request (takeover request, TOR) text display, voice playing, or the like.

Optionally, the sample data set further includes a risk status of a scenario in which the second vehicle is located, and the inputting the first data into a prediction model, to obtain a takeover risk of a first vehicle includes: inputting the first data into the prediction model, to obtain the takeover risk and a risk status of a scenario in which the first vehicle is located; and the controlling the first vehicle based on the takeover risk includes: controlling the first vehicle based on the takeover risk and the risk status of the scenario in which the first vehicle is located.

For example, the truth value information shown in Table 1 may further include a risk status of a scenario in which a current frame is located. Table 2 shows a correspondence between a scenario and a risk status.

**Table 2**

| Scenario | Risk status |
|---|---|
| Cut-in (cut-in) scenario | Low risk |
| Traffic light intersection scenario, blind spot obstacle missed detection scenario, and rainy and snowy day obstacle missed detection scenario | High risk |

Table 2 is merely an example. The correspondence between the scenario and the risk status is not specifically limited in embodiments of this application.

Optionally, when the risk status of the scenario in which the vehicle is located is a low risk, the prompt apparatus may be controlled to prompt the user to perform acceleration control (override), assist in steering, or take over the vehicle.

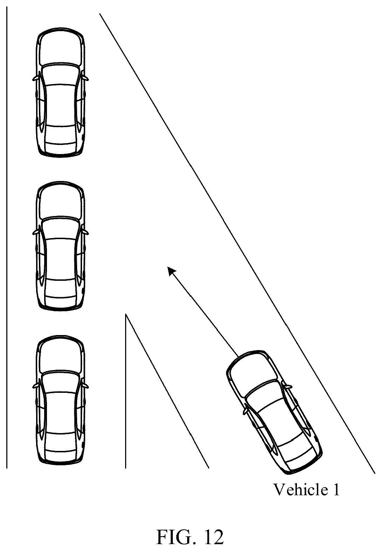

FIG. 12 is another diagram of a scenario in which a vehicle is located according to an embodiment of this application.

As shown in FIG. 12, a result output by a prediction model indicates that a vehicle 1 has a takeover risk in a future period of time and a scenario in which the vehicle is currently located is a cut-in scenario. It can be learned from Table 2 that, when the vehicle 1 is in the cut-in scenario, a corresponding risk status is a low risk. In this case, the vehicle 1 may prompt, through TOR text display or voice playing, the user to perform acceleration control, assist in steering, or take over the vehicle 1. When vehicle traffic is dense and the vehicle 1 cannot complete cut-in, when it is determined in advance, through takeover risk prediction, that an operational design domain (operational design domain, ODD) of the vehicle is exceeded, the user is prompted to perform acceleration control, assist in steering, or take over the vehicle 1.

Optionally, when the risk status of the scenario in which the vehicle is located is a high risk, a smooth transition autonomous driving exit strategy is used, or the vehicle directly exits the autonomous driving state.

Optionally, the training data set further includes a takeover reason of the second vehicle, and the inputting the first data into a prediction model to obtain a takeover risk of a first vehicle includes: inputting the first data into the prediction model, to obtain the takeover risk and a takeover reason of the first vehicle; and the controlling the prompt apparatus to prompt a user with the takeover risk includes: controlling the prompt apparatus to prompt the user with the takeover risk and the takeover reason.

For example, a takeover reason, for example, obstacle missed detection, obstacle false detection, or traffic light false detection, may be added to the truth value information shown in Table 1 by using a classification task (for example, limited enumeration).

For example, a text label may be added to the scenario in which the second vehicle is located in a text regression manner, and each text label indicates a takeover reason in the scenario in which the second vehicle is located.

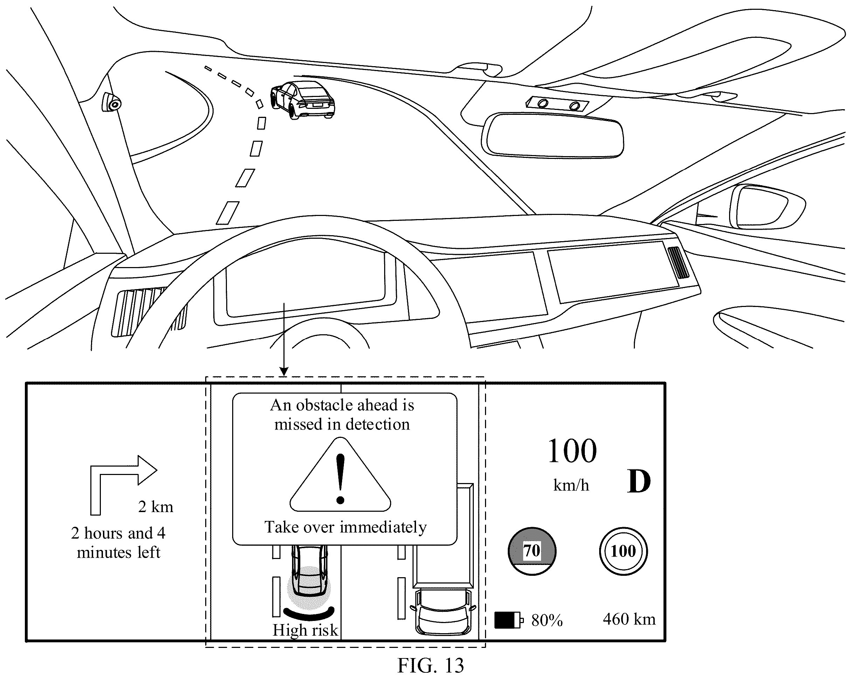

FIG. 13 is still another diagram of a scenario in which a vehicle is located according to an embodiment of this application.

A vehicle 1 is in an autonomous driving state, and a planned traveling speed within next 5 seconds is 100 km/h. Data collected by a camera, a lidar, and a millimeter-wave radar of the vehicle 1 is input into a prediction model, and an output result indicates that a takeover risk in next three seconds is a high risk and a takeover reason is obstacle missed detection. In this case, the vehicle 1 may determine that there is an obstacle (for example, a vehicle 2) in front of the vehicle 1 that is missed in detection, so that a prompt apparatus may be controlled to prompt the user with "An obstacle ahead is missed in detection", and prompt the user with "Take over immediately".

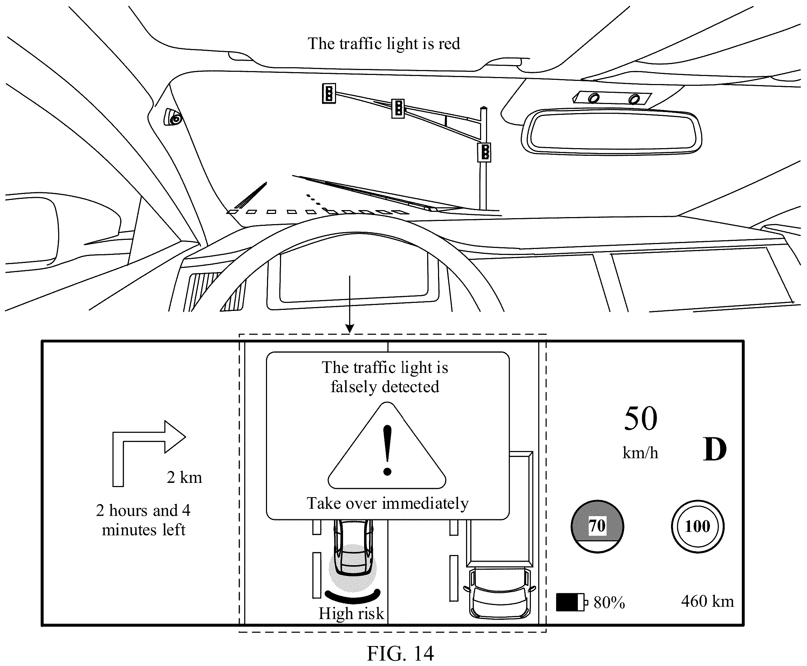

FIG. 14 is yet another diagram of a scenario in which a vehicle is located according to an embodiment of this application.

A vehicle 1 is in an autonomous driving state, and the vehicle 1 currently passes through a traffic light intersection at a speed of 50 km/h in next 5 seconds as planned. Data collected by a camera, a lidar, and a millimeter-wave radar of the vehicle 1 is input into a prediction model, and an output result indicates that a takeover risk in next three seconds is a high risk and a takeover reason is traffic light false detection. In this case, the vehicle 1 may determine that the traffic light is falsely detected or a detection result is incorrect (or a red light is recognized as a green light), and may control a prompt apparatus to prompt the user with "The traffic light is falsely detected", and prompt the user with "Takeover immediately".

For another example, the vehicle 1 performs a dangerous driving action (for example, a sharp turn) when the vehicle 1 is in a manual driving state and the driver has a blind area of view. Data collected by a camera, a lidar, and a millimeter-wave radar of the vehicle 1 is input into a prediction model, and an output result indicates that a takeover risk in next three seconds is a high risk and a takeover reason is obstacle missed detection. In this case, the vehicle 1 may determine that there is an obstacle (for example, a pedestrian) in the blind area of view of the driver that is missed in detection, and may control the prompt apparatus to prompt the user with "A surrounding obstacle is missed in detection" or prompt the user to pay attention to the obstacle in the blind area.

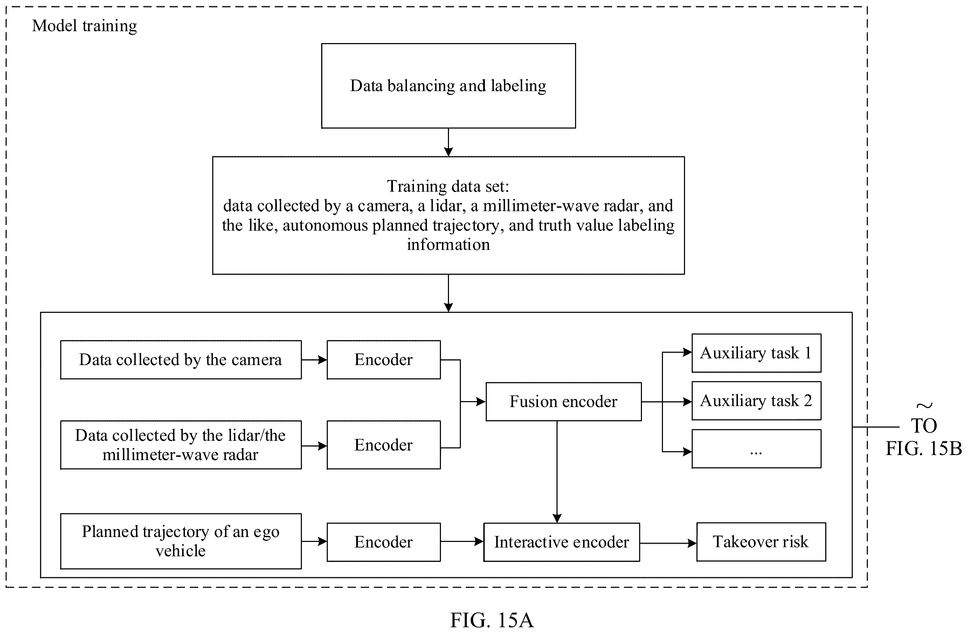

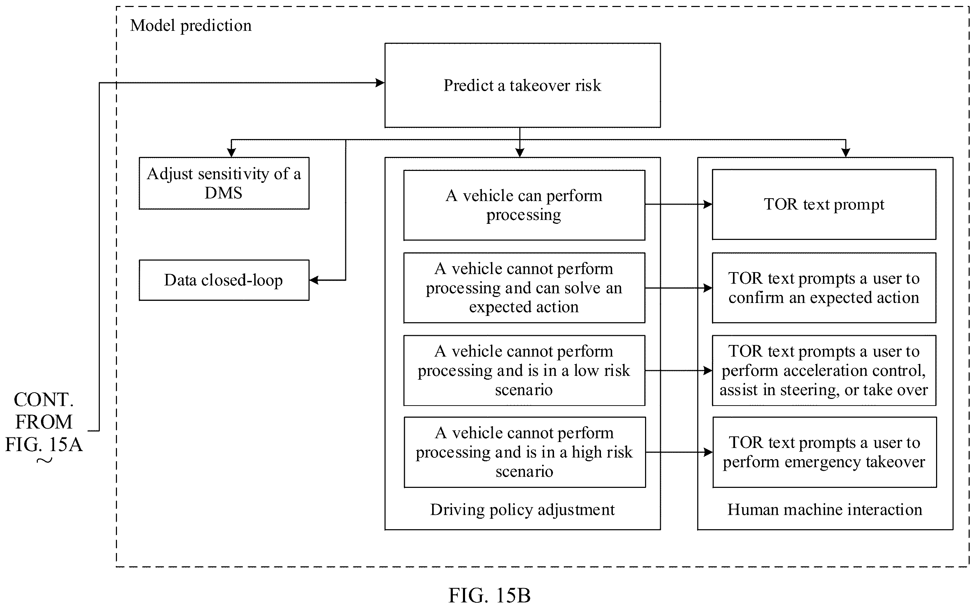

FIG. 15A and FIG. 15B are a diagram of a system architecture according to an embodiment of this application. As shown in FIG. 15A and FIG. 15B, the system architecture may be divided into model training and model prediction. During model training, raw data collected by a sensor may be classified into autonomous driving data and manual driving data. Sample balancing and labeling are performed on data collected by the sensor in a takeover state and data collected by the sensor in a non-takeover state in the autonomous driving data, sample balancing and labeling are performed on data collected by the sensor when a second vehicle is in the risk state and data collected by the sensor when the vehicle is not in the risk state, and a training data set may be obtained. The training data set includes the raw data collected by the sensor (for example, a camera, a lidar, or a millimeter-wave radar), a planned trajectory of the vehicle, and truth value information (for example, 3D occupancy, takeover time, takeover reason, and speed). The training data set is input to a takeover network for model training.

A network model used in the model training process shown in FIG. 15A and FIG. 15B is merely an example. This is not specifically limited in this embodiment of this application.

In model prediction, a takeover risk of the vehicle may be predicted by inputting the data collected by the sensor of the vehicle into the prediction model. The vehicle may perform a corresponding operation based on the output takeover risk.

For example, the vehicle may control, based on the output takeover risk, a prompt apparatus to perform visual display, adjust sensitivity of a DMS, and perform data closed-loop.

Optionally, as the output takeover risk increases, the vehicle may further execute different driving strategies.

For example, when the takeover risk is low (for example, the takeover risk indicates to taken over the vehicle after 8s), the vehicle may be adjusted from a radical driving strategy to a conservative driving strategy. Correspondingly, adjustment of the driving strategy may be displayed by using TOR text display.

For another example, as the takeover risk increases (for example, the takeover risk indicates to take over the vehicle after 6s), if the vehicle cannot perform processing (for example, cannot determine whether to change a lane in a solid line), and the vehicle resolves an expected action (for example, plans a new planned trajectory), TOR text can be used to prompt the user whether to use the new planned trajectory.

For another example, as the takeover risk increases (for example, the takeover risk indication indicates to take over the vehicle after 4s), if the vehicle cannot perform processing and the vehicle is in a low risk scenario (for example, a cut-in scenario), the TOR text or voice broadcast manner may be used to prompt the user to perform acceleration control, assist in steering, or take over the vehicle.

For another example, as a takeover risk increases (for example, the takeover risk indication indicates to take over the vehicle after 2s), if the vehicle cannot perform processing and the vehicle is in a high risk scenario (for example, a highway or a traffic light intersection), the TOR text may be used to prompt the user to perform emergency takeover. When an operation of taking over the vehicle by the user is not detected within preset duration, the vehicle may exit the autonomous driving state and take an active safety action (for example, pulling over).

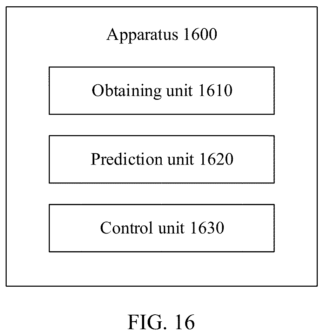

FIG. 16 is a block diagram of a control apparatus 1600 according to an embodiment of this application. As shown in FIG. 16, the apparatus 1600 includes: an obtaining unit 1610, configured to obtain first data collected by a first sensor; a prediction unit 1620, configured to input the first data into a prediction model, to obtain a takeover risk of a first vehicle, where the prediction model is obtained through training based on a training data set, the training data set includes second data collected by a second sensor and a takeover status and/or a risk status of a second vehicle, and the second vehicle includes the second sensor; and a control unit 1630, configured to control the first vehicle based on the takeover risk.

Optionally, the obtaining unit 1610 is further configured to obtain a first planned trajectory of the first vehicle; and the prediction unit 1620 is configured to input the first data and the first planned trajectory into the prediction model, to obtain the takeover risk, where the sample data set further includes a planned trajectory of the second vehicle.

Optionally, the sample data set further includes a risk status of a scenario in which the second vehicle is located; the prediction unit 1620 is configured to input the first data into the prediction model, to obtain the takeover risk and a risk status of a scenario in which the first vehicle is located; and the control unit 1630 is configured to control the first vehicle based on the takeover risk and the risk status of the scenario in which the first vehicle is located.

Optionally, the first vehicle further includes a prompt apparatus; and the control unit 1630 is configured to control the prompt apparatus to prompt a user with the takeover risk.

Optionally, the training data set further includes a takeover reason of the second vehicle; the prediction unit 1620 is configured to input the first data into the prediction model, to obtain the takeover risk and a takeover reason of the first vehicle; and the control unit 1630 is configured to control the prompt apparatus to prompt the user with the takeover risk and the takeover reason.

Optionally, the control unit 1630 is configured to adjust a frequency of attention detection and/or a frequency of hand-off detection based on the takeover risk.

Optionally, the first vehicle is in an autonomous driving state, and the control unit 1630 is configured to: control, based on the takeover risk, the prompt apparatus to prompt the user to perform acceleration control, prompt the user to assist in steering, or prompt the user to take over the first vehicle or exit the autonomous driving state.

Optionally, the first vehicle is in an autonomous driving state, and the control unit 1630 is configured to: control, based on the takeover risk and the scenario in which the first vehicle is located, the prompt apparatus to prompt the user with a third planned trajectory; and when the obtaining unit obtains input of the user for confirming the third planned trajectory, control the first vehicle based on the third planned trajectory.

Optionally, the takeover risk is a takeover risk within future preset duration.

For example, the obtaining unit 1610 may be the computing platform in FIG. 1, or the processing circuit, the processor, or the controller in the computing platform. For example, the obtaining unit 1610 is the processor 151 in the computing platform. The processor 151 may obtain data collected by one or more sensors.

For another example, the prediction unit 1620 may be the computing platform in FIG. 1, or the processing circuit, the processor, or the controller in the computing platform. For example, the prediction unit 1620 is the processor 152 in the computing platform. The processor 152 may determine the takeover risk of the vehicle based on data obtained by the processor 151.

For another example, the control unit 1630 may be the computing platform in FIG. 1, or the processing circuit, the processor, or the controller in the computing platform. For example, the control unit 1630 is the processor 153 in the computing platform. The processor 153 may control the vehicle based on the takeover risk determined by the processor 152. For example, a display apparatus may be controlled to display the takeover risk; or the display apparatus may be controlled to prompt the user to take over the vehicle; or the vehicle may be controlled to adjust sensitivity of a DMS.

The function implemented by the obtaining unit 1610, the function implemented by the prediction unit 1620, and the function implemented by the control unit 1630 may be implemented by different processors, or may be implemented by a same processor, or some functions may be implemented by a same processor. This is not limited in embodiments of this application.

It should be understood that division of the units in the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

The units in the apparatus may be configured as one or more processors (or processing circuits) that implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated and implemented in a form of a SoC. The SoC may include at least one processor, configured to implement any one of the foregoing methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is located in a vehicle, the processing unit may be the processors 151 to 15n shown in FIG. 1.

An embodiment of this application further provides a control system. The system includes one or more sensors and a computing platform. The computing platform includes the apparatus 1600.

For example, the one or more sensors may be located in a vehicle, and the computing platform may be located in a cloud server or the vehicle.

An embodiment of this application further provides a vehicle. The vehicle may include the foregoing apparatus 1600 or the foregoing system.

An embodiment of this application further provides a server. The server may include the foregoing apparatus 1600 or the foregoing system.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining first data collected by a first sensor;
inputting the first data into a prediction model, to obtain a takeover risk of a first vehicle, wherein the prediction model is obtained through training based on a training data set, the training data set comprises second data collected by a second sensor and a takeover status and/or a risk status of a second vehicle, and the second vehicle comprises the second sensor; and
controlling the first vehicle based on the takeover risk.

2. The method according to claim 1, wherein the method further comprises:
obtaining a first planned trajectory of the first vehicle; and
the inputting the first data into a prediction model, to obtain a takeover risk of a first vehicle comprises:
inputting the first data and the first planned trajectory into the prediction model, to obtain the takeover risk, wherein the sample data set further comprises a planned trajectory of the second vehicle.

3. The method according to claim 1 or 2, wherein the sample data set further comprises a risk status of a scenario in which the second vehicle is located, and the inputting the first data into a prediction model, to obtain a takeover risk of a first vehicle comprises:
inputting the first data into the prediction model, to obtain the takeover risk and a risk status of a scenario in which the first vehicle is located; and
the controlling the first vehicle based on the takeover risk comprises:
controlling the first vehicle based on the takeover risk and the risk status of the scenario in which the first vehicle is located.

4. The method according to any one of claims 1 to 3, wherein the first vehicle further comprises a prompt apparatus, and the controlling the first vehicle based on the takeover risk comprises:
controlling the prompt apparatus to prompt a user with the takeover risk.

5. The method according to claim 4, wherein the training data set further comprises a takeover reason of the second vehicle, and the inputting the first data into a prediction model to obtain a takeover risk of a first vehicle comprises:
inputting the first data into the prediction model, to obtain the takeover risk and a takeover reason of the first vehicle; and
the controlling the prompt apparatus to prompt a user with the takeover risk comprises:
controlling the prompt apparatus to prompt the user with the takeover risk and the takeover reason.

6. The method according to any one of claims 1 to 5, wherein the controlling the first vehicle based on the takeover risk comprises:
adjusting a frequency of attention detection and/or a frequency of hand-off detection based on the takeover risk.

7. The method according to any one of claims 1 to 5, wherein the first vehicle is in an autonomous driving state, and the controlling the first vehicle based on the takeover risk comprises:
controlling, based on the takeover risk, the prompt apparatus to prompt the user to perform acceleration control, prompt the user to assist in steering, or prompt the user to take over the first vehicle or exit the autonomous driving state.

8. The method according to any one of claims 1 to 5, wherein the first vehicle is in an autonomous driving state, and the controlling the first vehicle based on the takeover risk comprises:
controlling, based on the takeover risk and the scenario in which the first vehicle is located, the prompt apparatus to prompt the user with a third planned trajectory; and
when input of the user for confirming the third planned trajectory is obtained, controlling the first vehicle based on the third planned trajectory.

9. The method according to any one of claims 1 to 8, wherein the takeover risk is a takeover risk within future preset duration.

10. A control apparatus, comprising:
an obtaining unit, configured to obtain first data collected by a first sensor;
a prediction unit, configured to input the first data into a prediction model, to obtain a takeover risk of a first vehicle, wherein the prediction model is obtained through training based on a training data set, the training data set comprises second data collected by a second sensor and a takeover status and/or a risk status of a second vehicle, and the second vehicle comprises the second sensor; and
a control unit, configured to control the first vehicle based on the takeover risk.

11. The apparatus according to claim 10, wherein the obtaining unit is further configured to obtain a first planned trajectory of the first vehicle; and
the prediction unit is configured to input the first data and the first planned trajectory into the prediction model, to obtain the takeover risk, wherein the sample data set further comprises a planned trajectory of the second vehicle.

12. The apparatus according to claim 10 or 11, wherein the sample data set further comprises a risk status of a scenario in which the second vehicle is located;
the prediction unit is configured to input the first data into the prediction model, to obtain the takeover risk and a risk status of a scenario in which the first vehicle is located; and
the control unit is configured to control the first vehicle based on the takeover risk and the risk status of the scenario in which the first vehicle is located.

13. The apparatus according to any one of claims 10 to 12, wherein the first vehicle further comprises a prompt apparatus; and
the control unit is configured to control the prompt apparatus to prompt a user with the takeover risk.

14. The apparatus according to claim 13, wherein the training data set further comprises a takeover reason of the second vehicle;
the prediction unit is configured to input the first data into the prediction model, to obtain the takeover risk and a takeover reason of the first vehicle; and
the control unit is configured to control the prompt apparatus to prompt the user with the takeover risk and the takeover reason.

15. The apparatus according to any one of claims 10 to 14, wherein the control unit is configured to:
adjust a frequency of attention detection and/or a frequency of hand-off detection based on the takeover risk.

16. The apparatus according to any one of claims 10 to 14, wherein the first vehicle is in an autonomous driving state, and the control unit is configured to:
control, based on the takeover risk, the prompt apparatus to prompt the user to perform acceleration control, prompt the user to assist in steering, or prompt the user to take over the first vehicle or exit the autonomous driving state.

17. The apparatus according to any one of claims 10 to 14, wherein the first vehicle is in an autonomous driving state, and the control unit is configured to:
control, based on the takeover risk and the scenario in which the first vehicle is located, the prompt apparatus to prompt the user with a third planned trajectory; and
when the obtaining unit obtains input of the user for confirming the third planned trajectory, control the first vehicle based on the third planned trajectory.

18. The apparatus according to any one of claims 10 to 17, wherein the takeover risk is a takeover risk within future preset duration.

19. A control apparatus, comprising:
a memory, configured to store a computer program; and
a processor, configured to execute the computer program stored in the memory, so that the apparatus performs the method according to any one of claims 1 to 9.

20. A control system, comprising a sensor and a computing platform, wherein the computing platform comprises the control apparatus according to any one of claims 10 to 19.

21. A vehicle, comprising the control apparatus according to any one of claims 10 to 19, or comprising the control system according to claim 20.

22. A computer-readable storage medium, wherein the computer-readable storage medium stores a computer program, and when the computer program is executed by a computer, the method according to any one of claims 1 to 9 is implemented.

23. A chip, comprising a circuit configured to perform the method according to any one of claims 1 to 9.
